# EUROPÄISCHE PATENTANMELDUNG

(11) **EP 1 037 494 A2**
(43) Veröffentlichungstag der Anmeldung: **20.09.2000**
(21) Anmeldenummer: 00200848.0
(22) Anmeldetag: 09.03.2000
(51) Int. Cl.: H04Q 11/04

(54) **Netzwerkstation**

(30) Priorität: 17.03.1999 DE 19912008
(71) Anmelder: Philips Corporate Intellectual Property GmbH, 52064 Aachen (DE); Koninklijke Philips Electronics N.V., 5621 BA Eindhoven (NL)
(72) Erfinder: Huschmann, Wolfgang, 52064 Aachen (DE); Kawczyk, Jost, 52064 Aachen (DE); Günther, Rainer, 52064 Aachen (DE); Busch, Mirko, 52064 Aachen (DE)
(74) Vertreter: Volmer, Georg, Dipl.-Ing.

(57) **Zusammenfassung**

Die Erfindung bezieht sich auf eine Netzwerkstation (1) mit einem Umschalter (4) zur Kopplung einer Vermittlungsstelle (2) mit einem POTS- oder ISDN-Telefon und einer Detektionsschaltung (3). Nach einer Inbetriebnahme oder einer Betriebsartänderung vom POTS-Mode in den ISDN-Mode steuert die Detektionsschaltung (3) den Umschalter (4) so, dass dieser in den ISDN-Mode geht und somit die Vermittlungsstelle (2) mit einem ISDN-Netzwerk-Abschluss (11) koppelt. Bei einer Betriebsänderung von dem ISDN-Mode in den POTS-Mode wird der Umschalter (4) von der Detektionsschaltung (3) so betätigt, dass dieser die Vermittlungsstelle (2) mit dem POTS-Telefon koppelt.

## Beschreibung

Die Erfindung bezieht sich auf eine Netzwerkstation zum teilnehmernahen Betrieb.

Die Telekommunikationsnetze sind derzeit noch im teilnehmernahen Bereich sowohl mit analogen als auch mit digitalen Anschlüssen ausgestattet. Bei einem analogen Betrieb, der auch als POTS-Mode (POTS = Plain Old Telecommunication Service) bezeichnet wird, erhält der analoge Anschluss von einer analogen Baugruppe in einer Vermittlungsstelle analoge Signale und bei einem digitalen Betrieb, der als ISDN-Mode (ISDN = Integrated Services Digital Network) bezeichnet wird, erhält der digitale Anschluss von einer digitalen Baugruppe in der Vermittlungsstelle digitale Signale. Für den digitalen Betrieb ist ein ISDN-Netzwerk-Abschluss (ISDN network termination) erforderlich, welches zwischen den digitalen Anschluss und einem digitalen Telefon geschaltet ist.

Der Erfindung liegt die Aufgabe zugrunde, eine Netzwerkstation zu schaffen, die bei einer Betriebsänderung in der Vermittlungsstelle einen Betrieb sowohl im POTS-Mode als auch im ISDN-Mode ermöglicht.

Die Aufgabe wird durch eine Netzwerkstation mit einem Umschalter zur Kopplung einer Vermittlungsstelle mit einem POTS- oder ISDN-Telefon gelöst, die eine Detektionsschaltung enthält, welche nach einer Inbetriebnahme oder einer Betriebsartänderung vom POTS-Mode in den ISDN-Mode zur Kopplung der Vermittlungsstelle mit einem ISDN-Netzwerk-Abschluss und bei einer Betriebsänderung von dem ISDN-Mode in den POTS-Mode zur Kopplung der Vermittlungsstelle mit dem POTS-Telefon durch Betätigung des Umschalters vorgesehen ist.

Die Netzwerkstation koppelt nach der Inbetriebnahme die Vermittlungsstelle über einen Umschalter mit einem ISDN-Telefon. Eine Inbetriebnahme liegt z.B. nach einem Netzausfall oder nach einem Einbau der Netzwerkstation bei einem Teilnehmer vor. Wenn die Detektionsschaltung erkennt, dass kein ISDN-Mode vorliegt, steuert die Detektionsschaltung den Umschalter so, dass dieser die Vermittlungsstelle mir einem analogen oder POTS-Telefon koppelt. Der Vorteil der erfindungsgemäßen Maßnahmen besteht darin, dass eine Umschaltung von der analogen in die digitale Betriebsart praktisch ferngesteuert von der Vermittlungsstelle erfolgen kann und somit keine Serviceleistung beim Teilnehmer erfolgen muss.

Eine Ausführungsform der Detektionsschaltung enthält einen mit den Eingangsanschlüssen des Umschalters gekoppelten Gleichrichter, einen Schwellwertdetektor, eine erste und zweite Impulsformerschaltung und ein bistabiles Relais. Der Schwellwertdetektor vergleicht das vom Gleichrichter gelieferte Signal mit einem Schwellwert und die erste Impulsformerschaltung erzeugt ein Betätigungssignal für das bistabile Relais zur Umschaltung des Umschalters vom POTS-Mode in den ISDN-Mode, wenn das vom Gleichrichter gelieferte Signal den Schwellwert erreicht. Die zweite Impulsformerschaltung erzeugt ein Betätigungssignal für das bistabile Relais zur Umschaltung des Umschalten vom ISDN-Mode in den POTS-Mode, wenn der ISDN-Netzwerk-Abschluss keinen ISDN-Betrieb mit der Vermittlungsstelle durchführen kann.

Die Detektionsschaltung enthält noch ein Zeitglied, welches zur Verzögerung der Erzeugung eines Betätigungssignals der ersten Impulsformerschaltung vorgesehen ist. Hiermit werden Störimpulse und die Rufwechselspannung von der Vermittlungsstelle ankommenden Signal unterdrückt.

Ein mit dem ISDN-Netzwerk-Abschluss gekoppelter Mikroprozessor wertet Statusmeldungen des ISDN-Netzwerk-Abschlusses aus. Die zweite Impulsformerschaltung erzeugt das Betätigungssignal für das bistabile Relais nach Lieferung eines Anregungssignals vom Mikroprozessor. Der Mikroprozessor erzeugt ein Anregungssignal, wenn der Mikroprozessor eine Meldung über den nicht durchzuführenden ISDN-Betrieb vom ISDN-Netzwerk-Abschluss erhält.

Ausführungsbeispiele der Erfindung werden nachstehend anhand der Fig. näher erläutert. Es zeigen:
- Fig. 1: ein Blockschaltbild einer Netzwerkstation mit einem Umschalter zur Kopplung einer Vermittlungsstelle mit einem analogen oder digitalen Telefon und
- Fig. 2: ein detailliertes Schaltbild der Netzwerkstation.

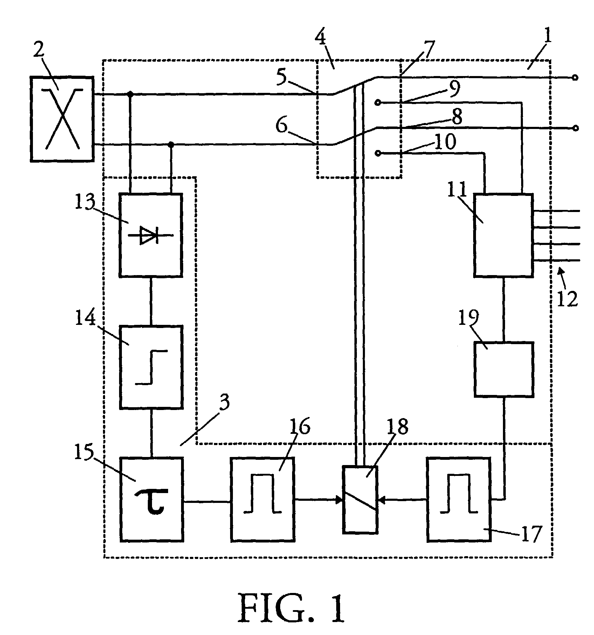

Fig. 1 zeigt eine Netzwerkstation 1, die eine Vermittlungsstelle 2 entweder mit einem analogen oder einem digitalen Telefon koppelt. Die Netzwerkstation 1 enthält eine Detektionsschaltung 3, die erkennt, ob die Vermittlungsstelle 2 mit dem analogen oder digitalen Telefon zu koppeln ist. In der Vermittlungsstelle 2 kann beispielsweise durch Tausch einer Baugruppe vom analogen in den digitalen Betrieb umgestellt werden. Die in der Netzwerkstation 1 enthaltene Detektionsschaltung 3 erkennt automatisch den Wechsel einer Betriebsart und steuert in Abhängigkeit von der erkannten Betriebsart einen ebenfalls in der Nerzwerkstation enthaltenen Umschalter 4. Der analoge Betrieb wird auch als POTS-Mode (POTS = Plain Old Telecommunication Service) und der digitale Betrieb als ISDN-Mode (ISDN = Integrated Services Digital Network) bezeichnet.

Der Umschalter 4 ist über zwei Eingangsanschlüsse 5 und 6 mit der Vermittlungsstelle 2, über zwei Ausgangsanschlüsse 7 und 8 mit dem nicht dargestellten analogen Telefon und über zwei weitere Ausgangsanschlüsse 9 und 10 mit einem ISDN-Nerzwerk-Abschluss 11 (ISDN network terminator) gekoppelt. Wenn der POTS-Mode vorliegt, sind die Eingangsanschlüsse 5 und 6 mit den Ausgangsanschlüssen 7 und 8 verbunden. Im anderen Fall, wenn der ISDN-Mode vorliegt, sind die Eingangsanschlüsse 5 und 6 mit den Ausgangsanschlüssen 9 und 10 verbunden. Der ISDN-Netzwerk-Abschluss 11 liefen an seiner S₀-Schnittstelle 12 Signale für das nicht näher dargestellte ISDN-Telefon.

Die Detektionsschaltung 3 enthält einen Gleichrichter 13, einen Schwellwertdetektor 14, ein Zeitglied 15, eine erste und zweite Impulsformerschaltung 16 und 17 und ein bistabiles Relais 18. und einen Mikroprozessor 19. Es sei vorausgesetzt, dass der Umschalter die Eingangsanschlüsse 5 und 6 mit den Ausgangsanschlüssen 7 und 8 verbunden hat (POTS-Mode). Die Detektionsschaltung 3 erkennt beispielsweise nach Austausch einer für den Betrieb des analogen Telefons vorgesehenen Karte durch eine für den Betrieb des digitalen Telefons vorgesehenen Karte, dass der ISDN-Mode vorliegt. Hierbei arbeitet die Detektionsschaltung 3 folgendermaßen:

Die an den Eingangsanschlüssen 5 und 6 des Umschalters 4 anliegende Speisespannung wird durch den Gleichrichter 13 in eine Spannung mit definierter Polarität überführt. Die Speisespannung ist eine Gleichspannung, deren Polarität unbekannt ist. Der Schwellwertdetektor 14 liefert bei Erreichen oder Überschreiten einer Schwellspannung in der Ausgangsspannung des Gleichrichters 13 ein Signal, welches das nachfolgende Zeitglied 15 aktiviert. Das Zeitglied 15 wird dann inaktiv, wenn die vom Gleichrichter 13 gelieferte Ausgangsspannung kleiner als die Schwellspannung wird. Nach einer Zeit τ, nachdem das Zeitglied 15 aktiviert worden ist, liefert das Zeitglied 15 ein bestimmtes Ausgangssignal, welche die nachfolgende erste Impulsformerschaltung 16 in einen kurzen Stromimpuls umsetzt. Das Zeitglied ermöglicht die Unterdrückung von Störimpulsen und der Rufwechselspannung an den Eingangsanschlüssen 5 und 6. Der von der ersten Impulsformerschaltung 16 gelieferte kurze Stromimpuls wird de bistabilen Relais 18 geliefert, welches in den ISDN-Mode geht und im Umschalter 4 die Eingangsanschlüsse 5 und 6 mit den Ausgangsanschlüssen 9 und 10 verbindet. Die Detektionsschaltung 3 geht des weiteren in einen hochohmigen Zustand über, so dass der in die Detektionsschaltung 3 fließende Strom sehr viel geringer ist als über die Eingangsanschlüsse 5 und 6 fließende Strom.

Nach Kopplung des ISDN-Netzwerk-Abschlusses 11 mit der Vermittlungsstelle 2 und während des Betriebs im ISDN-Mode tauscht der ISDN-Netzwerk-Abschluss 11 verschiedene Meldungen mit der Vermittlungsstelle 2 aus (Austausch von digitalen Codeworten). Ein solcher ISDN-Netzwerk-Abschluss 11 gibt an einem bestimmten Ausgang eine Statusmeldung aus, die darüber Auskunft gibt, ob ein Daten- bzw. Meldungsaustausch mit der Vermittlungsstelle 2 durchgeführt wird. Ein solcher Meldungsaustausch ist beispielsweise nicht möglich, wenn in der Vermittlungsstelle 2 eine Baugruppe für den analogen Betrieb neu eingesetzt worden ist.

Die Statusmeldung des ISDN-Netzwerk-Abschlusses 11 erhält der Mikroprozessor 19. Falls der Mikroprozessor 19 feststellt, dass kein ISDN-Mode vorliegt, wird ein Signal zu der zweiten Impulsformerschaltung 17 gesendet, die einen kurzen Stromimpuls erzeugt. Durch den kurzen, dem bistabilen Relais 18 gelieferten Stromimpuls wird der Umschalter die Eingangsanschlüsse 5 und 6 mit den Ausgangsanschlüssen 7 und 8 verbinden. Somit liegt der POTS-Mode vor, bei dem das analoge Telefon mit der Vermittlungsstelle 2 gekoppelt ist.

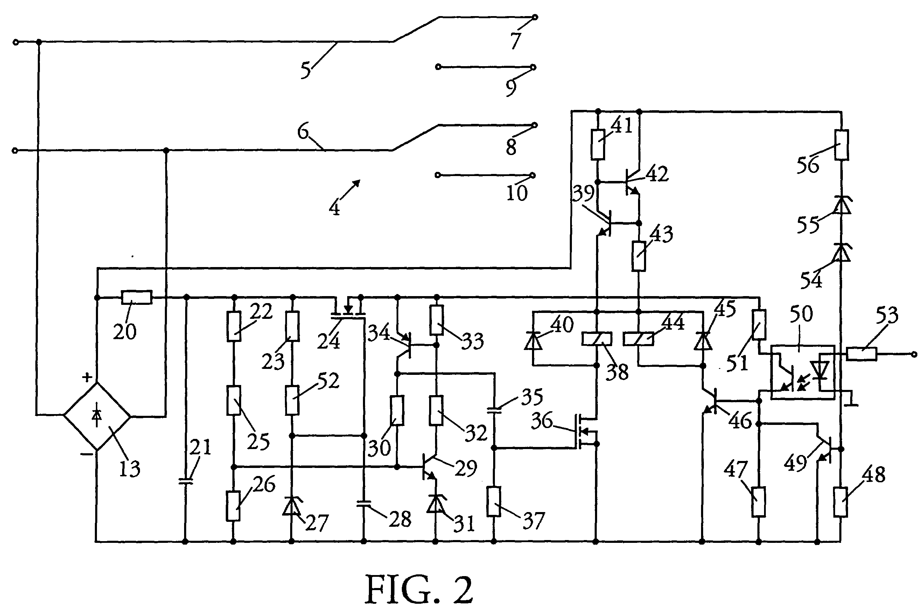

Ein detailliertes Schaltbild der Detektionsschaltung 3 ist in Fig. 2 dargestellt. Die Detektionsschaltung 3 zeigt ebenso wie die Fig. 1 den Gleichrichter 13, der mit seinen Wechselspannungsanschlüssen an die Eingangsanschlüsse 5 und 6 des Umschalters 4 angeschlossen und beispielsweise als Graetz-Brückenschaltung ausgebildet ist. Der positive Ausgangsanschluss des Gleichrichters 13 ist mit einem Widerstand 20 verbunden, dessen anderer Anschluss einen gemeinsamen Knoten mit jeweils einem ersten Anschluss eines Kondensators 21, eines Widerstands 22 und eines Widerstands 23 und dem Drain-Anschluss eines n-Kanal MOS-Feldeffekttransisrors 24 bildet. Der zweite Anschluss des Widerstands 22 ist über zwei in Reihe geschaltete weitere Widerstände 25 und 26, der zweite Anschluss des Widerstands 23 über einen Widerstand 52 und eine Z-Diode 27 und der zweite Anschluss des Kondensators 21 mit dem negativen Ausgangsanschluss des Gleichrichters 13 verbunden. Die Kathode der Z-Diode 27 und der Anschluss des Widerstands der nicht mit dem Widerstand 23 verbunden sind an den Gate-Anschluss des Transistors 24 und an einen Kondensator 28 angeschlossen. Der andere Anschluss des Kondensators 28 ist an den negativen Ausgangsanschluss des Gleichrichters 13 gelegt.

Der gemeinsame Anschluss der Widerstände 25 und 26 ist mit der Basis eines NPN-Bipolartransistors 29 und einem Widerstand 30 verbunden. Der Emitter des Transistors 29 ist an die Kathode einer Z-Diode 31, deren Anode an den negativen Ausgangsanschluss des Gleichrichters 13 gelegt ist, und der Kollektor des Transistors 29 an einen Widerstand 32 angeschlossen. Der andere Anschluss des Widerstands 32 ist mit einem ersten Anschluss eines Widerstands 33 und der Basis eines PNP-Bipolartransistors 34 verbunden. Der Emitter des Transitors 34, der zweite Anschluss des Widerstands 33, ein ersten Anschluss eines Widerstands 51 und der Source-Anschluss des Transistors 24 bilden einen gemeinsamen Knoten. Der Kollektor des Transistors 34 ist an einen Kondensator 35 und an den Anschluss des Widerstands 30 angeschlossen, der nicht mit der Basis des Transistors 29 verbunden ist. Eine weitere Verbindung bildet der andere Anschluss des Kondensators 35 mit dem Gate-Anschluss eines n-Kanal MOS-Feldeffekttransistors 36 und eines Widerstands 37, dessen anderer Anschluss an den negativen Ausgangsanschluss des Gleichrichters 13 gelegt ist. Der Source-Anschluss des Transistors 36 ist ebenfalls mit dem negativen Anschluss des Gleichrichters 13 und dessen Drain-Anschluss mit dem negativen Anschluss einer ersten Wicklung des bistabilen Relais 18 verbunden. Die erste Wicklung 38 betätigt die Schalter des Umschalters 4. Der positive Anschluss der Wicklung 38 ist an den Emitter eines NPN-Bipolartransistors 39 gelegt. Parallel zur Wicklung 38 ist eine Diode 40 geschaltet. Der Kollektor des Transistors 39 ist mit einem Widerstand 41 und mit der Basis eines NPN-Bipolartransistors 42 verbunden. Einen gemeinsamen Anschluss bilden die Basis des Transistors 39, der Emitter des Transistors 42 und ein erster Anschluss eines Widerstands 43. Der Kollektor des Transistors 42 und der andere Anschluss des Widerstands 41 sind an den positiven Ausgangsanschluss des Gleichrichters 13 angeschlossen.

Eine weitere Parallelschaltung aus einer zweiten Wicklung 44 des bistabilen Relais 18 und einer Diode 45 ist zwischen den anderen Anschluss des Widerstands 43 und dem Kollektor eines NPN-Bipolartransistors 46 angeordnet. Der positive Anschluss der Wicklung 44, das zur Betätigung der Schalter des Umschalters 4 vorgesehen ist, ist mit dem Widerstand 43 und dem positiven Anschluss da ersten Wicklung verbunden. Der Emitter des Transistors 46 ist ebenso an den negativen Ausgangsanschluss des Gleichrichters 13 angeschlossen wie die ersten Anschlüsse von zwei Widerständen 47 und 48 und der Emitter eines NPN-Bipolartransistors 49. Die Basis des Transistors 46, der zweite Anschluss des Widerstands 47 und der Kollektor des Transistors 49 sind mit dem Emitter des Transistors eines Optokopplers 50 verbunden. Der Kollektor des Transistors des Optokopplers 50 ist an den zweiten Anschluss des Widerstands 51 gelegt. Die Anode der Diode im Optokoppler 50 ist über einen Widerstand 53 an den Mikroprozessor 19 geschaltet. Die Kathode der Diode im Optokoppler 50 ist an Masse gelegt. Der zweite Anschluss des Widerstands 48 und die Basis des Transistors 49 sind noch über zwei in Reihe geschaltete Z-Dioden 54 und 55 mit dem ersten Anschluss eines Widerstands 56 verbunden, dessen zweiter Anschluss an den positiven Ausgangsanschluss des Gleichrichters 13 angeschlossen ist.

Der Widerstand 20 und der Kondensator 21 bilden das Zeitglied 15. Der Schwellwertdetektor 14 enthält im wesentlichen die Transistoren 29 und 34, die Widerstände 30, 32 und 33 und der Z-Diode 31. Die erste Impulsformerschaltung 16 wird durch den Transistor 36, den Kondensator 35 und den Widerstand 37 realisiert. Die zweite Impulsformerschaltung 17 besteht im wesentlichen aus dem Transistor 46.

Wenn beispielsweise nach dem Einbau eine Baugruppe für den Betrieb eines digitalen Telefons in der Vermittlungsstelle oder nach der Inbetriebnahme der Netzwerkstation 1, ein Strom von der Vermittlungsstelle zur Netzwerkstation 1 fließt, wird der Kondensator 21 aufgeladen. Wenn der Ladungszustand des Kondensators 21 einen bestimmten Schwellwert erreicht, wird der Transistor 29 leitend und dadurch ebenfalls der Transistor 34 leitend. Der Schwellwert wird durch die Basis-Emitter-Spannung des Transistors 29 und die Zenerspannung der Z-Diode 31 bestimmt. Nachdem der Transistor 34 leitend geworden ist, wird der Kondensator 35 aufgeladen. Weist der Ladezustand des Kondensators 35 einen bestimmten Schwellwert auf wird der Transistor 36 kurz leitend geschaltet und liefert somit einen kurzen Stromimpuls zur ersten Wicklung 36, so dass die erste Wicklung 38 die Schalter im Umschalter in den ISDN-Mode setzt.

Den Strom erhält sowohl das erste als auch die zweite Wicklung 38 bzw. 44 von einer Stromquelle, die durch die Transistoren 39 und 42 und die Widerstände 41 und 43 realisiert ist. Die den Wicklungen 38 und 44 parallelgeschalteten Dioden 40 und 45 haben eine Schutzfunktion für die Transistoren 36 und 46.

Nach Betätigen der Schalter des Umschalters 4 durch die erste Wicklung 38 geht die Schaltung in einen hochohmigen Zustand über, so dass nur ein ganz geringer Strom in die Detektionsschaltung 3 fließt. Die Hochohmigkeit wird insbesondere durch die hochohmig gewählten Widerstände 22, 23, 25 und 52 erreicht. Einen erneuten Stromimpuls kann die Wicklung 38 erst erhalten, wenn der Kondensator 21 nach einem Entladungsvorgang neu aufgeladen wird. Der Transistor 24 und die Z-Diode 27 haben die Funktion, die Spannung für die Elemente 35 und 37 konstant zu halten, damit die erste Impulsformung nicht spannungsabhängig wird. Der Kondensator 28 hat eine Glättungsfunktion.

Wenn der Mikroprozessor 19 aus der vom ISDN-Netzwerk-Abschluss 11 gesendeten Statusmeldung die Information entnimmt, dass kein ISDN-Mode mehr vorliegt, liefen der Mikroprozessor einen Impuls zum Optokoppler 50. Dieser Impuls wird vom Transistor des Optokopplers 50, der den Mikroprozessor 19 von der zweiten Impulsformerschaltung 17 galvanisch trennt, zum Transistor 46 gegeben. Der Transistor 46 wird kurz leitend und liefen einen Stromimpuls zur zweiten Wicklung 44, so dass die Schalter im Umschalter 4 in den POTS-Mode wechseln.

Die Widerstände 47 und 48 und der Transistor 49 verhindern zusammen mit den beiden in Reihe geschalteten Z-Dioden 54 und 55 und dem Widerstand 56, dass der Transistor 46 leitend wird, wenn die Spannung an den Ausgangsanschlüssen des Gleichrichters eine Spannung von 80 Volt überschreiten. In diesem Fall kann nämlich auf keinen Fall ein POTS-Mode vorliegen.

## Patentansprüche

1. Netzwerkstation (1) mir einem Umschalter (4) zur Kopplung einer Vermittlungsstelle (2) mit einem POTS- oder ISDN-Telefon und einer Detektionsschaltung (3), welche nach einer Inbetriebnahme oder einer Betriebsartänderung vom POTS-Mode in den ISDN-Mode zur Kopplung der Vermittlungsstelle mir einem ISDN-Netzwerk-Abschluss (11) und bei einer Betriebsänderung von dem ISDN-Mode in den POTS-Mode zur Kopplung der Vermittlungsstelle (2) mit dem POTS-Telefon durch Betätigung des Umschalten (4) vorgesehen ist.

2. Netzwerkstation nach Anspruch 1,
dadurch gekennzeichnet,
dass die Detektionsschaltung (3) einen mit den Eingangsanschlüssen (5, 6) des Umschalters (4) gekoppelten Gleichrichter (13), einen Schwellwertdetektor (14), eine erste und zweite Impulsformerschaltung (16, 17) und ein bistabiles Relais (18) enthält,
dass der Schwellwertdetektor (14) zum Vergleich des vom Gleichrichter (13) gelieferten Signals mir einem Schwellwert und die erste Impulsformerschaltung (16) zur Erzeugung eines Betatigungssignals für das bistabile (18) Relais zur Umschaltung des Umschalters (4) vom POTS-Mode in den ISDN-Mode vorgesehen ist, wenn das vom Gleichrichter (13) gelieferte Signal den Schwellwert erreicht, und
dass die zweite Impulsformerschaltung (17) zur Erzeugung eines Betätigungssignals für das bistabile Relais (18) zur Umschaltung des Umschalten (4) vom ISDN-Mode in den POTS-Mode vorgesehen ist, wenn der ISDN-Netzwerk-Abschluss (11) keinen ISDN-Betrieb mit der Vermittlungsstelle (2) durchführen kann.

3. Netzwerkstation nach Anspruch 2,
dadurch gekennzeichnet,
dass die Detektionsschaltung (3) noch ein Zeitglied (15) enthält, welches zur Verzögerung der Erzeugung eines Betätigungssignals der ersten Impulsformerschaltung (16) vorgesehen ist.

4. Netzwerkstation nach Anspruch 2,
dadurch gekennzeichnet,
dass ein mit dem ISDN-Netzwerk-Abschluss (11) gekoppelter Mikroprozessor (19) zur Auswertung von Statusmeldungen des ISDN-Netzwerk-Abschlusses (11) vorgesehen ist,
dass die zweite Impulsformerschaltung (17) zur Erzeugung des Betätigungssignals für das bistabile Relais (18) nach Lieferung eines Anregungssignals vom Mikroprozessor (19) vorgesehen ist und
dass der Mikroprozessor (19) zur Erzeugung eines Anregungssignals vorgesehen ist, wenn der Mikroprozessor (19) eine Meldung über den nicht durchzuführenden ISDN-Betrieb vom ISDN-Netzwerk-Abschluss (11) erhält.
